# EUROPÄISCHE PATENTSCHRIFT

(11) **EP 1 899 640 B1**
(45) Veröffentlichungstag und Bekanntmachung des Hinweises auf die Patenterteilung: **14.07.2010**
(21) Anmeldenummer: 06742548.8
(22) Anmeldetag: 07.04.2006
(51) Int. Cl.: F16N 25/02, F16N 21/02

(54) **NOTSCHMIEREINHEIT FÜR EINLEITUNGSSCHMIEREINRICHTUNGEN**
Emergency lubrication unit for lubrication starting devices
unité de lubrification de secours pour dispositif d'initiation de graissage

(30) Priorität: 07.07.2005 DE 202005010673 U
(43) Veröffentlichungstag der Anmeldung: 19.03.2008
(73) Patentinhaber: Lincoln GmbH, 69190 Walldorf (DE)
(72) Erfinder: TRINKEL, Ralf, 67229 Gerolsheim (DE)
(74) Vertreter: KEIL & SCHAAFHAUSEN Patentanwälte
(86) Internationale Anmeldenummer: PCT/EP2006/003183
(87) Internationale Veröffentlichungsnummer: WO 2007/006354

(56) Entgegenhaltungen:
- GB-A- 191 030 019
- US-A- 4 114 560
- US-A- 4 397 376
- US-A- 5 147 016
- PATENT ABSTRACTS OF JAPAN Bd. 008, Nr. 143 (M-306), 4. Juli 1984 (1984-07-04) & JP 59 040095 A (MITSUBISHI DENKI KK), 5. März 1984 (1984-03-05)

## Beschreibung

Die Erfindung betrifft eine Notschmiereinheit für Einleitungsschmiereinrichtungen.

Derartige Einheiten werden benötigt, wenn in einer Einleitungsschmiereinrichtung, z. B. bei einem Pumpenausfall die Anlage mit Schmierstoff von Hand befüllt werden soll. Eine derartige Schmierstoffeinheit soll einfach im Aufbau sowie dauerhaft zuverlässig in seiner Funktion sein. Das GB 191030019A offenbart eine solche Notschmiereinheit.

Diese Anforderungen werden von einer erfindungsgemäßen Notschmiereinheit erfüllt, welcher einen Grundkörper aufweist, in dessen Längsbohrung ein Steuerkolben axial beweglich von einer Feder in Richtung einer Dichtung gedrückt wird, mit seitlichen Anschlüssen einer von dem Steuerkolben in der Längsbohrung freigehaltenen Kammer von einer Schmierstoffpumpe und zu der mit Schmierstoff zu versorgenden Anlage, so dass in Dichtstellung des Steuerkolbens Schmierstoff durch die Kammer von der Schmierstoffpümpe zu der Anlage förderbar ist. Bei Pumpenausfall ist der Steuerkolben aus seiner Dichtstellung gegen die Wirkung der Feder mittels Notschmierstoff in eine Stellung überführbar, in welcher der Anschluss zu der Anlage geöffnet und der Anschluss zu der Schmierstoffpumpe geschlossen ist, so dass die Anlage mittels des Notschmierstoffes befüllbar ist.

Vorteilhafterweise hat der Steuerkolben eine Entlastungsbohrung für die Schmierstoffrückführung von der Kammer zu der Schmierstoffpumpe, wenn der Steuerkolben mit Notschmierstoff beaufschlagt wird.

Die Feder ist vorteilhafterweise als Schraubenlinienfeder in einer Verschlussschraube der Längsbohrung aufgenommen.

Dabei kann in der Verschlussschraube ein Anschlagstift für den Steuerkolben vorgesehen sein, um ein Unterschreiten der Federblocklänge zu vermeiden.

In weiterer Ausgestaltung des Erfindungsgedankens ist in einem Ende (dem der Verschlussschraube gegenüberliegendem Ende) der Längsbohrung eine Befüllschraube mit einem Schmiernippel ohne Rückschlagventil vorgesehen. Der Schmiernippel dient der Zuführung des Notschmierstoffes und erlaubt ein Entweichen einer geringen Steuerschmierstoffmenge, so dass der Steuerkolben bei Beendigung der Notschmierstoffzuführung von der Feder wieder in Richtung des Schmiernippels in seine Dichtstellung gedrückt werden kann.

Die Dichtung liegt vorteilhafterweise an der Befüllschraube an, so dass ein zuverlässiges Gegenlager für den federvorgespannten Steuerkolben vorgesehen ist.

Der Einfachheit halber können die Anschlüsse von der Schmierstoffpumpe und zu der Anlage jeweils mit geraden Rohrverschraubungen gebildet sein.

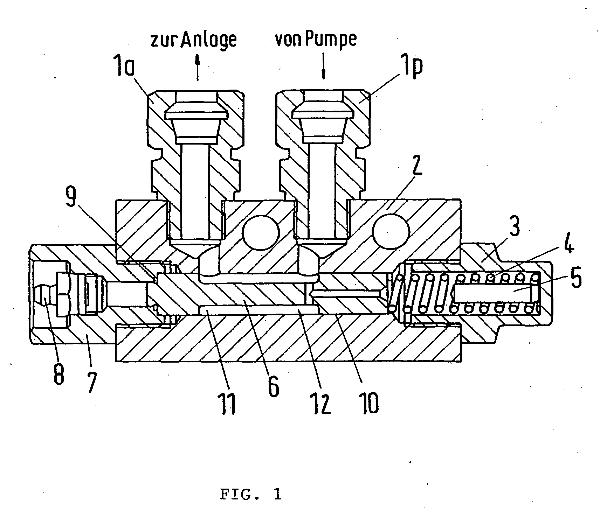

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen und deren Rückbeziehung.

Die einzige Figur veranschaulicht eine die Erfindung aufweisende Notschmiereinheit im Längsschnitt.

Bei der dargestellten Notschmiereinheit befindet sich in einem Grundkörper 2 eine Längsbohrung 10, innerhalb welcher ein Steuerkolben 6 axial verschieblich gelagert ist. Im Automatikbetrieb der Einleitungsschmiereinrichtung wird der Steuerkolben 6 von einer Feder 4 gegen eine als Ring ausgebildete Dichtung 9 gedrückt, welche an der inneren Stirnseite einer in das eine Ende der Bohrung 6 eingeschraubte Befüllschraube 7 anliegt. Die Feder 4 ist in einer Verschlussschraube 3 an dem der Befüllschraube 7 gegenüberliegenden Ende der Bohrung 10 aufgenommen. Ein zylinderförmiger Anschlagstift 5 befindet sich in der Verschlussschraube 3, um ein Unterschreiten der Federblocklänge zu vermeiden. In der Befüllschraube 7 ist ein Schmiernippel 8 ohne Rückschlagventil eingeschraubt. In die Kammer 11 mündet ein Anschluss 1p von der Schmierstoffpumpe. Von der Kammer 11 weg führt ein Anschluss 1a zu der mit Schmierstoff zu versorgenden Anlage. Die Anschlüsse 1 a, 1p sind jeweils als gerade Rohrverschraubungen ausgebildet. Im Automatikbetrieb, in welcher sich der Steuerkolben 6 in seiner linken Dichtstellung befindet, kann aufgrund der Kammer 11 Schmierstoff ungehindert von der Pumpenleitung in die Anlagenleitung fließen. Der Steuerkolben 6 wird im Automatikbetrieb durch die Kraft der Feder 4 in dieser Stellung gehalten. Bei Druckbeaufschlagung aus Pumpenrichtung wird der Steuerkolben 6 zusätzlich durch den Systemdruck gegen die Dichtung 9 gedrückt.

Beispielsweise bei Pumpenausfall muss diese auf Entlastungsstellung gebracht werden. Somit ist die Pumpenleitung offen. Nun kann, bspw. mit einer Handhebelschmierstoffpresse, an dem Schmiernippel 8 Notschmierstoff in den Grundkörper 2 gedrückt werden. Der Steuerkolben 6 bewegt sich gegen die Kraft der Feder 4 nach rechts. Der Schmierstoff in der Kammer 11 kann über eine Entlastungsbohrung 12 in dem Steuerkolben 6 zu der Schmierstoffpumpe hin entweichen. Der Steuerkolben 6 bewegt sich so weit, bis die Leitung zu der Anlage geöffnet und die Leitung zu der Schmierstoffpumpe geschlossen ist. In dieser Stellung kann die Anlage mit Notschmierstoff befüllt werden. Wenn das Befüllen der Anlage abgeschlossen ist, muss lediglich der Schmierkopf von der Handhebelpresse von dem Schmiernippel 8 abgenommen werden. Eine geringe Menge Schmierstoff (Steuerschmierstoffmenge) wird durch den Schmiernippel 8 ohne Rückschlagventil entweichen, so dass der Steuerkolben 4 durch die Kraft der Feder 4 wieder in Richtung des Schmiernippels 8 gedrückt werden kann. Der Steuerkolben 6 befindet sich dann wieder in Grundstellung und verschließt den Eingang am Schmiernippel 8 durch die eingebaute Dichtung 9. In dieser Dichtstellung kann entweder ein automatischer oder ein manueller Schmierzyklus erfolgen.

Für das in Funktion setzen der erfindungsgemäßen Notschmiereinheit ist es lediglich erforderlich, die Schmierstoffpumpe auf Entlastung zu stellen. Für einen manuellen Schmierzyklus wird kein Werkzeug benötigt. Eine Fehlbedienung ist ausgeschlossen, da sich die Einrichtung bei Nicht-Betätigung selbsttätig in Grundstellung befindet, in welcher der Steuerkolben 6 von der Feder 4 in Dichtstellung an der Dichtung 9 gedrückt ist.

### Bezugszeichenliste:

- 1a, 1p: Anschlüsse
- 2: Grundkörper
- 3: Verschlussschraube
- 4: Feder
- 5: Anschlagstift
- 6: Steuerkolben
- 7: Befüllschraube
- 8: Schmiernippel
- 9: Dichtung
- 10: Längsbohrung
- 11: Kammer
- 12: Entlastungsbohrung

## Patentansprüche

1. Notschmiereinheit für Einleitungsschmiereinrichtungen, mit einem Grundkörper (2), in dessen Längsbohrung (10) ein Steuerkolben (6) axial beweglich von einer Feder (4) in Richtung einer Dichtung (9) gedrückt wird, mit seitlichen Anschlüssen (1a, 1p) einer von dem Steuerkolben (6) in der Längsbohrung (10) frei gehaltenen Kammer (11) von einer Schmierstoffpumpe und zu einer mit Schmierstoff zu versorgenden Anlage, so dass in der Dichtstellung des Steuerkolbens (6) Schmierstoff durch die Kammer (11) von der Schmierstoffpumpe zu der Anlage förderbar ist, wobei bei Pumpenausfall der Steuerkolben (6) aus seiner Dichtstellung gegen die Wirkung der Feder (4) mittels Notschmierstoff in eine Stellung überführbar ist, in welcher der Anschluss (1 a) zu der Anlage geöffnet und der Anschluß (1 p) zu der Schmierstoffpumpe geschlossen ist, so dass die Anlage mit dem Notschmierstoff befüllbar ist.

2. Notschmiereinheit nach Anspruch 1, **dadurch gekennzeichnet, dass** der Schmierkolben (6) eine Entlastungsbohrung (12) für die Schmierstoffrückführung von der Kammer (11) zu der Schmierstoffpumpe beim Verschieben des Steuerkolbens (6) gegen die Kraft der Feder (4) aufweist.

3. Notschmiereinheit nach Anspruch 1 oder 2, **dadurch gekennzeichnet, dass** die Feder (4) in einer Verschlussschraube (3) der Längsbohrung (10) aufgenommen ist.

4. Notschmiereinheit nach Anspruch 3, **dadurch gekennzeichnet, dass** in der Verschlussschraube (3) ein Anschlagstift (5) für den Steuerkolben (6) vorgesehen ist.

5. Notschmiereinheit nach einem der vorhergehenden Ansprüche, **dadurch gekennzeichnet, dass** in einem Ende der Längsbohrung (10) eine Befüllschraube (7) mit einem Schmiernippel (8) ohne Rückschlagventil vorgesehen ist.

6. Notschmiereinheit nach Anspruch 5, **dadurch gekennzeichnet, dass** die Dichtung (9) an der Befüllschraube (7) anliegt.

7. Notschmiereinheit nach einem der vorhergehenden Ansprüche, **dadurch gekennzeichnet, dass** die Anschlüsse (1a, 1p) mit geraden Rohrverschraubungen gebildet sind.

## Claims

1. An emergency lubrication unit for lubrication starting devices with a basic body (2) in whose longitudinal bore (10) a control piston (6) is pressed axially moveably by a spring (4) in the direction of a seal (9) with lateral connections (1a, 1p) of a chamber (11) kept clear by the control piston (6) in the longitudinal bore (10) from a lubricant pump and to a plant to be supplied with lubricant, so that in the sealing position of the control piston (6) lubricant can be delivered through the chamber (11) by the lubricant pump to the plant, wherein upon pump failure the control piston (6) can be transferred from its sealing position against the effect of the spring (4) by means of emergency lubricant into a position in which the connection (1a) to the plant is opened and the connection (1p) to the lubricant pump is closed, so that the plant can be filled with the emergency lubricant.

2. The emergency lubrication unit according to Claim 1, **characterized in that** the lubricating piston (6) comprises a relief bore (12) for the lubricant return from the chamber (11) to the lubricant pump upon displacing of the control piston (6) against the force of the spring (4).

3. The emergency lubrication unit according to Claim 1 or 2, **characterized in that** the spring (4) is accommodated in a screw plug (3) of the longitudinal bore (10).

4. The emergency lubrication unit according to Claim 3, **characterized in that** in the screw plug (3) a stop pin (5) for the control piston (6) is provided.

5. The emergency lubrication unit according to any one of the preceding claims, **characterized in that** in an end of the longitudinal bore (10) a filling screw (7) with a lubricating nipple (8) without non-return valve is provided.

6. The emergency lubrication unit according to Claim 5, **characterized in that** the seal (9) abuts the filling screw (7).

7. The emergency lubrication unit according to any one of the preceding claims, **characterized in that** the connections (1a, 1p) are formed with straight pipe screw connections.

## Revendications

1. Unité de graissage de secours pour des dispositifs d'initiation de graissage, comprenant un corps de base (2), dans l'alésage longitudinal (10) duquel un piston de commande (6) est pressé de façon axialement mobile par un ressort (4) en direction d'un joint (9), des branchements (1a, 1p) latéraux d'une chambre (11) maintenue libre par le piston de commande (6) dans l'alésage longitudinal (10) venant d'une pompe à lubrifiant et allant à une installation à alimenter en lubrifiant, de sorte que, dans la position d'étanchéité du piston de commande (6), du lubrifiant est transporté à travers la chambre (11) de la pompe à lubrifiant à l'installation, le piston de commande (6) pouvant être transféré, en cas de défaillance de pompe, de sa position d'étanchéité contre l'effet du ressort (4) au moyen de lubrifiant de secours dans une position dans laquelle le branchement (la) avec l'installation est ouvert et le branchement (1p) avec la pompe à lubrifiant est fermé, de sorte que l'installation peut être remplie avec du lubrifiant de secours.

2. Unité de graissage de secours selon la revendication 1, **caractérisée en ce que** le piston graisseur (6) présente un alésage de délestage (12) pour le recyclage de lubrifiant de la chambre (11) vers la pompe à lubrifiant lors du déplacement du piston de commande (6) contre la force du ressort (4).

3. Unité de graissage de secours selon la revendication 1 ou 2, **caractérisée en ce que** le ressort (4) est réceptionné dans une vis de fermeture (3) de l'alésage longitudinal (10).

4. Unité de graissage de secours selon la revendication 3, **caractérisée en ce qu'**une broche de butée (5) est prévue dans la vis de fermeture (3) pour le piston de commande (6).

5. Unité de graissage de secours selon l'une quelconque des revendications précédentes, **caractérisée en ce qu'**une vis de remplissage (7) avec un graisseur (8) sans clapet anti-retour est prévue dans une extrémité de l'alésage longitudinal (10).

6. Unité de graissage de secours selon la revendication 5, **caractérisée en ce que** le joint (9) s'applique sur la vis de remplissage (7).

7. Unité de graissage de secours selon l'une quelconque des revendications précédentes, **caractérisée en ce que** les branchements (1a, 1p) sont formés avec des assemblages vissés de tubes droits
